# EUROPÄISCHE PATENTANMELDUNG

(11) **EP 3 352 337 A1**
(43) Veröffentlichungstag der Anmeldung: **25.07.2018**
(21) Anmeldenummer: 17152223.8
(22) Anmeldetag: 19.01.2017
(51) Int. Cl.: H02K 1/27

(54) **ROTOR EINER PERMANENTERREGTEN, ROTIERENDEN ELEKTRISCHEN MASCHINE UND VERFAHREN ZUR HERSTELLUNG EINES DERARTIGEN ROTORS**

(71) Anmelder: Siemens Aktiengesellschaft, 80333 München (DE)
(72) Erfinder: Friedrich, Jens, 97616 Bad Neustadt (DE); Kuhn, Martin, 97708 Roth a d Saale (DE); Schlierf, Adrian, 91126 Schwabach (DE); Tropoja, Ardian, 97702 Münnerstadt (DE); Wolf, Nico, 98596 Trusetal (DE)

(57) **Zusammenfassung**

Ein Rotor (100) für eine permanenterregte, rotierende elektrische Maschine umfasst ein mehrere innenliegende Magnettaschen (6) aufweisendes Blechpaket (101) und eine Vielzahl von in den Magnettaschen (6) eingebetteten Permanentmagneten (4). Die Permanentmagnete (4) sind in den Magnettaschen (6) durch darin eingebrachte, zumindest abschnittsweise deformierbare Keilelemente (9) kraftschlüssig fixiert. Die Erfindung betrifft ferner ein Verfahren zum Herstellen eines derartigen Rotors.

## Beschreibung

Die Erfindung betrifft einen Rotor für eine permanenterregte, rotierende elektrische Maschine, sowie ein Verfahren zur Herstellung eines derartigen Rotors.

Rotierende elektrische Maschinen können beispielsweise als Generatoren oder als Innen- oder Außenläufermotoren ausgebildet sein. Bei Elektromotoren ist ein Rotor typischerweise drehfest auf einer Rotorwelle befestigt, welche bezüglich einen den Rotor umgebenden Stator drehbeweglich gelagert ist. Derartige Rotoren bestehen typischerweise aus einer Mehrzahl von Rotorblechen, die in axialer Richtung, d. h. entlang der Rotorachse nebeneinander gestapelt sind. Hierzu ist es bekannt, mehrere derartige in einem sog. Blechpaket angeordnete Rotorbleche auf der Rotorwelle beispielsweise aufzuschrumpfen, d. h. das Blechpaket wird im erwärmten Zustand auf die Rotorwelle aufgeschoben und anschließend abgekühlt.

Elektromotoren sind beispielsweise als fremd- und permanenterregte Innen- oder Außenläufermotoren ausgebildet, bei denen der Rotor entsprechend Erregerwicklungen aufweist oder mit Permanentmagneten versehen ist. Permanenterregte Synchronmotoren (PSM) werden heutzutage verstärkt im Bereich der elektrisch angetriebenen Kraftfahrzeuge eingesetzt, da diese Elektromoren einen hohen Wirkungsgrad bei kompakten Bauformen erreichen.

Bei derartig permanenterregten, rotierenden elektrischen Maschinen ist eine hinreichende Fixierung der Permanentmagnete bezüglich des Rotors für ein gleichbleibendes Schwingungsverhalten bzw. zur Bereitstellung einer gleichbleibend hohen Leistung sicherzustellen. Dies wird gemäß bekannten Herstellungsverfahren bei Rotoren mit innenliegenden Permanentmagneten dadurch erreicht, dass die in Magnettaschen eingesetzten Permanentmagnete stoffschlüssig durch Einbringen eines Vergussharzes, insbesondere eines Epoxidharzes fixiert werden. Ein derartiges Vorgehen lässt sich jedoch insbesondere bei komplizierten Rotorgeometrien unter Umständen nur schwer umsetzen und ist daher fertigungstechnisch aufwändig.

Es daher Aufgabe der Erfindung, die Fixierung von in einem Rotor eingebetteten Permanentmagneten zu verbessern.

Hinsichtlich der Vorrichtung wird diese Aufgabe gelöst durch einen Rotor mit den weiteren Kennzeichen des Patentanspruchs 1.

Ein Rotor für eine permanenterregte, rotierende elektrische Maschine umfasst ein mehrere innenliegende Magnettaschen aufweisendes Blechpaket und eine Vielzahl von in den Magnettaschen eingebetteten Permanentmagneten. Die Permanentmagnete sind in den Magnettaschen durch darin eingebrachte, zumindest abschnittsweise deformierbare Keilelemente kraftschlüssig fixiert.

Die Erfindung schlägt somit vor, in Abkehr zur gängigen Lehre eine primär kraftschlüssige Fixierung der Permanentmagnete in den Magnettaschen des Blechpakets vorzusehen. Dies hat den Vorteil, dass kein zusätzliches Vergussmaterial in die Magnettaschen eingebracht werden muss, was sich insbesondere in Abhängigkeit der Rotorgeometrie als schwierig erweisen kann. Die kraftschlüssige Fixierung hingegen kann durch zumindest ein in die jeweilige Magnettasche eingebrachtes Keilelement erfolgen. In anderen Ausführungsbeispielen sind in jeder Magnettasche mehrere Keilelemente eingebracht, die ein insbesondere zwischen den Keilelementen liegenden Permanentmagnet kraftschlüssig fixieren. In jedem Fall bewirkt die kraftschlüssige Fixierung der Permanentmagnete eine bessere Aufnahme der Fliehkräfte und eine optimierte Krafteinleitung in das Blechpaket bei hohen Drehzahlen. Eine ausreichende Fixierung der Permanentmagnete ist insbesondere bei Elektromotoren wichtig, um ein gleichbleibendes Schwingungsverhalten bzw. eine gleichbleibende Leistungsaufnahme sicherzustellen.

Das Einbringen der Keilelemente in die Magnettaschen ist ein Fügeprozess, welches sich zudem gut automatisieren lässt. Dies ermöglicht insbesondere eine Reduzierung der Fertigungskosten.

Das Blechpaket des Rotors ist vorzugsweise in an sich bekannter Art und Weise aus mehreren gestapelten Rotorblechen gebildet, um die Ausbildung von unerwünschten Wirbelströmen zu unterdrücken.

Jeder Permanentmagnet ist vorzugsweise in der jeweiligen Magnettasche zwischen dem zumindest einen darin eingebrachten Keilelement und einer gegenüberliegend angeordneten Anlageschulter der Magnettasche verklemmt. Eine derartige Fixierung stellt sicher, dass es nicht zu Mikrobewegungen des Permanentmagneten in der jeweiligen Magnettasche kommt, so dass ein abrasiver Verschleiß des typischerweise spröden Magnetmaterials vermieden werden kann. Gleichermaßen kann auf diese Art und Weise eine hinreichende Fixierung der Permanentmagnete in axialer Richtung sichergestellt werden.

Das Keilelement hat vorzugsweise die Gestalt eines O-Rings oder eines Hohlzylinders. Das Keilelement besteht aus einem elastischen Material und wird beim Einbringen in die Magnettasche derart verformt, dass auf den Permanentmagneten eine Rückstellkraft vermittelt wird.

Besonders bevorzugt besteht das Keilelement aus Kunststoff.

Jeder Permanentmagnet ist vorzugsweise in der jeweiligen Magnettasche zusätzlich durch ein ausgehärtetes Reaktionsharz stoffschlüssig fixiert. In einem derartigen Ausführungsbeispiel kann die vorstehend beschriebene kraftschlüssige Fixierung der Permanentmagnete primär zu Zweck einer vereinfachten Montage erfolgen, d. h. die Permanentmagnete werden zunächst temporär in den jeweiligen Magnettaschen mittels zumindest abschnittsweise deformierbaren Keilelementen fixiert und anschließend mit dem Blechpaket durch insbesondere in die Magnettasche eingebrachtes Reaktionsharz permanent stoffschlüssig verbunden.

Die Erfindung betrifft insbesondere Rotoren für einen Elektromotor. Der vorstehend beschriebene Rotor eignet sich in besonderem Maße für einen Elektromotor im Antriebsstrang eines elektrisch angetriebenen Kraftfahrzeugs, insbesondere eines Personenkraftwagens oder eines Nutzfahrzeugs. Mit elektrisch angetriebenen Kraftfahrzeugen sind solche gemeint, die zumindest einen zum Vortrieb des Kraftfahrzeugs ausgebildeten elektrischen Antrieb aufweisen. Diese Definition schließt insbesondere sogenannte Hybridfahrzeuge ein, bei denen typischerweise zusätzlich zum elektrischen Antrieb ein Verbrennungsmotor vorgesehen ist.

Bevorzugt weist der Rotor eine Staffelung auf, d. h. das Blechpaket umfasst mehrere, auf einer Rotorwelle nebeneinander drehfest fixierte Einzelpakete. Jedes Einzelpaket weist mehrere innenliegende Magnettaschen auf. Auf der Rotorwelle nebeneinander angeordnete Einzelpakete sind zueinander mit einem Winkelversatz um eine Rotorachse verdreht angeordnet.

In solchen Fällen hat sich die kraftschlüssige Fixierung mittels Keilelementen als besonders vorteilhaft herausgestellt, da das nachträgliche Einbringen von Vergussmasse bzw. Epoxidharz in die Magnettaschen aufgrund der Rotorgeometrie schwierig ist. Eine denkbare Alternative ist es, eine stoffschlüssige Fixierung der Permanentmagnete auf der Ebene der Einzelpakete vorzunehmen, d. h. die Permanentmagnete werden zunächst in den jeweiligen Einzelpaketen fixiert, aus denen anschließend der gestaffelte Rotor gebildet wird. Ein derartiges Vorgehen ist allerdings fertigungstechnisch aufwändig. Auch in diesem Zusammenhang vereinfacht eine zumindest temporäre kraftschlüssige Befestigung der Permanentmagnete in den Einzelpaketen mittels der vorstehend genannten Keilelemente die Montage.

Die eingangs genannte Aufgabe wird ferner gelöst durch ein Verfahren zur Herstellung eines Rotors mit den Merkmalen des Patentanspruchs 7.

Bei einem Verfahren zum Herstellen des vorstehend beschriebenen Rotors werden jeweils Permanentmagnete und Keilelemente in die innenliegenden Magnettaschen des Blechpakets derart eingebracht, dass die Permanentmagnete von den zumindest abschnittsweise deformierbaren Keilelementen kraftschlüssig fixiert werden.

Vorzugsweise sind die Permanentmagnete mit einer Beschichtung versehen, die ein insbesondere aus einem nichtpolymerisierten duroplastischen Kunststoffmaterial bestehendes Reaktionsharz umfasst. Der Rotor mit den darin eingebrachten und mittels der Keilelemente fixierten Permanentmagneten wird auf eine Temperatur erhöht, die höher als eine Erweichungs- oder Verflüssigungstemperatur der Beschichtung ist. Das Reaktionsharz verteilt sich daraufhin innerhalb der Magnettaschen und härtet anschließend aus, wobei die Permanentmagnete stoffschlüssig fixiert werden. Die stoffschlüssige Verbindung hält die Permanentmagnete über den ganzen Drehzahlbereich an der jeweilig definierten Stelle.

Besonders bevorzugt umfasst die Beschichtung eine Matrix aus dem Reaktionsharz und einem Härter.

In einem bevorzugten Ausführungsbeispiel besteht die Matrix aus teilvernetztem und teilweise ausgehärtetem Reaktionsharz. Die Matrix kann metastabil sein, so dass die beschichten Permanentmagnete gekühlt werden müssen, um ein vollständiges Aushärten des Reaktionsharzes zu vermeiden. Besonders bevorzugt weist die Matrix jedoch derartige Materialeigenschaften auf, dass ein Aushärteprozess bei Raumtemperatur zu vernachlässigen ist.

Für eine weitere Beschreibung der Erfindung wird auf das in den Zeichnungsfiguren gezeigte Ausführungsbeispiel verwiesen. Es zeigen in einer schematischen Darstellung:
- Fig. 1:: ein achtpoliges Rotorblech gemäß einem möglichen Ausführungsbeispiel der Erfindung in einer schematischen Draufsicht;
- Fig. 2:: einen Ausschnitt des Rotorblechs der Figur 1 im Detail;
- Fig. 3:: den in Figur 2 dargestellten Ausschnitt mit eingebetteten Permanentmagneten;
- Fig. 4:: ein Ausführungsbeispiel der Erfindung, bei dem die Permanentmagnete zusätzlich stoffschlüssig fixiert sind;
- Fig. 5:: ein aus Einzelpaketen aufgebauten Rotor mit einer Staffelung.

Einander entsprechende Teile sind in allen Zeichnungsfiguren mit den gleichen Bezugszeichen versehen.

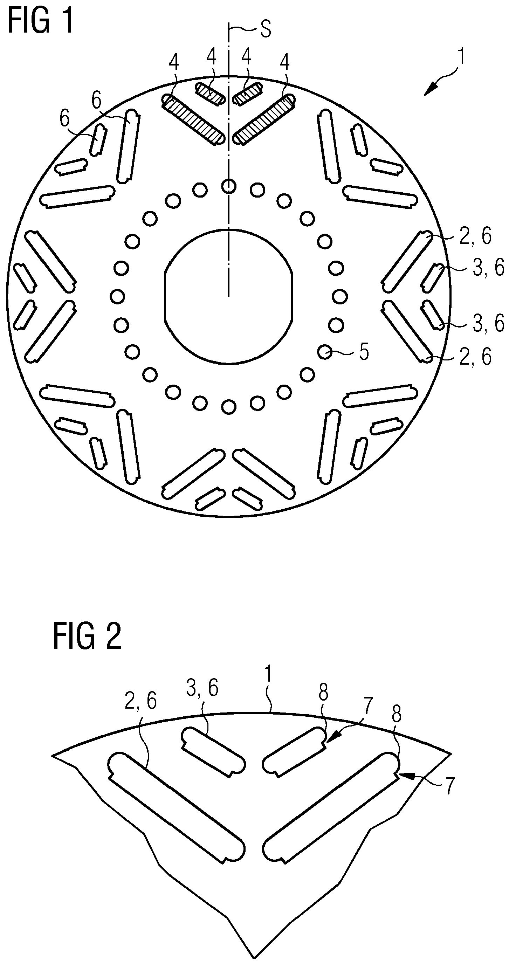

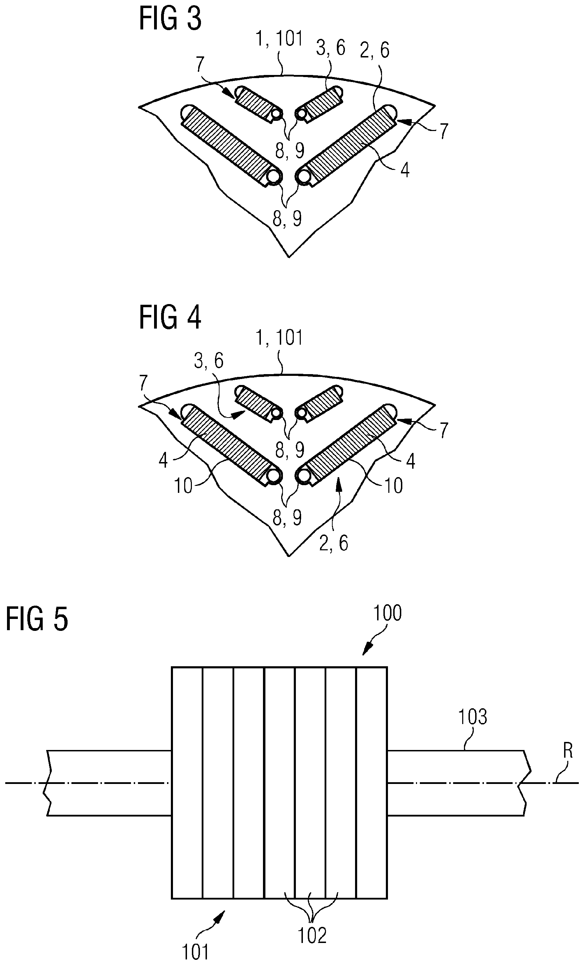

Figur 1 zeigt ein achtpoliges Rotorblech 1 in einer Draufsicht. Details des Rotorblechs 1 bzw. eines aus derartigen Rotorblechen 1 gebildeten Blechpakets 101 sind Figuren 2 und 3 zu entnehmen.

Das Rotorblech 1 umfasst erste und zweite Ausnehmungen 2, 3, die umfänglich um das Rotorblech 1 verteilt angeordnet sind. Die ersten und zweiten Ausnehmungen 2, 3 dienen zur Aufnahme von Permanentmagneten 4 und haben hierzu eine schlitzförmige, längliche und gerade Gestalt. Die ersten und zweiten Ausnehmungen 2, 3 sind derart orientiert, dass ihre Längsausdehnungen schräg bezüglich einer radialen Richtung verlaufen, d. h. sie verlaufen bezüglich der radialen Richtung in einem spitzen Winkel. Jeweils zwei zueinander V-förmig angeordnete erste und zweite Ausnehmungen 2, 3 bilden einen Rotorpol. Sowohl die beiden ersten Ausnehmungen 2 des Rotorpols als auch die beiden zweiten Ausnehmungen 3 des Rotorpols sind bezüglich einer dazwischenliegenden Spiegelachse S spiegelsymmetrisch angeordnet. Die Spiegelachse S verläuft hierbei in der radialen Richtung. Die radial weiter innen liegenden Enden der ersten bzw. zweiten Ausnehmungen 2, 3 des Rotorpols haben einen kleineren Abstand voneinander, als die gegenüberliegenden radial außenliegenden Enden.

Die ersten Ausnehmungen 2 sind in einer radial innenliegenden ersten Anordnung in das Rotorblech 1 eingebracht. Die zweiten Ausnehmungen 3 sind bezüglich der ersten Ausnehmungen 2 radial nach außen versetzt, d. h. die Gesamtheit der zweiten Ausnehmungen 3 bilden eine radial außenliegende zweite Anordnung. Sowohl die erste und als auch die zweite Anordnung ist in einem kreisringförmigen Radialbereich des Rotorblechs 1 eingebracht. Der kreisringförmige Radialbereich, in dem die zweite Anordnung eingebracht ist, liegt im Wesentlichen vollständig innerhalb des kreisringförmigen Radialbereichs der ersten Anordnung, so dass eine sehr kompakte Struktur für das einzubringende Magnetmaterial vorgegeben ist.

Die beiden ersten und die beiden zweiten Ausnehmungen 2, 3 eines jeden Rotorpols sind zueinander V-förmig angeordnet. Sowohl die ersten beiden Ausnehmungen 2 als auch die beiden zweiten Ausnehmungen 3 eines jeden Rotorpols verlaufen somit zueinander in einem Winkel. Dabei ist der Winkel, in dem die beiden ersten Ausnehmungen 2 zueinander angeordnet sind, kleiner als der Winkel, in dem die beiden zweiten Ausnehmungen 3 zueinander angeordnet sind.

Das Rotorblech 1 weist ferner eine weitere radial innenliegende, umfängliche Anordnung von an regelmäßigen Winkelpositionen angeordneten Aussparungen 5 zur Aufnahme von nicht näher dargestellten Wuchtgewichten auf. Durch Einbringen von Wuchtgewichten in die Aussparungen 5 kann ein von den Rotorblechen 1 gebildeter Rotor 100 ausgewuchtet bzw. eine Unwucht ausgeglichen werden.

Zur Ausbildung eines Rotors 100 für eine rotierenden elektrischen Maschine, insbesondere für einen Elektromotor, wird zunächst in an sich bekannter Art und Weise ein Blechpaket 101 aus einer Vielzahl von Rotorblechen 1 gebildet. Hierzu werden die Rotorbleche 1 derart gestapelt und im Blechpaket 101 fixiert, dass die ersten und zweiten Ausnehmungen 2, 3 durchgängige Magnettaschen 6 zur Aufnahme der Permanentmagnete 4 bilden.

Figur 3 zeigt eine Ausführungsform in einer schematischen Seitenansicht, die einen sogenannten gestaffelten Rotor 100 betrifft. Das Blechpaket 101 des Rotors 100 ist aus einer Vielzahl von Einzelpaketen 102, beispielsweise aus 5 bis 7 Einzelpaketen 102, gebildet, die jeweils durchgängige Magnettaschen 6 für die Permanentmagnete 4 aufweisen. Die Einzelpakete 102 sind zueinander um einen Winkelversatz versetzt auf einer Rotorwelle 103 fixiert, d. h. die Einzelpakete 102 sind zueinander um einen kleinen Winkel um eine Rotorachse R verdreht angeordnet. Der Winkelversatz entspricht hierbei bevorzugt dem Quotienten aus 360° und der Anzahl der Statornuten eines Stators des Elektromotors. In einem Ausführungsbeispiel weist der zu einem achtpoligen Rotor 100 korrespondierende Stator 48 Statornuten zur Aufnahme von Statorwicklungen auf. Entsprechend sind die 7 Einzelpakte 102 dieses Ausführungsbeispiels um jeweils 7,5° zueinander versetzt angeordnet.

Figur 2 zeigt einen Ausschnitt des Rotorblechs 1 mit zwei ersten und zwei zweiten Ausnehmungen 2, 3, die zur Ausbildung eines Rotorpols vorgesehen sind, im Detail. Jede erste und zweite Ausnehmungen 2, 3 weisen jeweils endseitig Anlageschultern 7 auf, die zum Verklemmen der Permanentmagnete 4 in den entsprechenden Magnettaschen 6 dienen. Die ersten und zweiten Ausnehmungen 2, 3 weisen zusätzlich Ausbuchtungen 8 zur Aufnahme von Keilelementen 10 auf, die sich in der unmittelbaren Umgebung der Anlageschultern 7 befinden.

Figur 3 zeigt ein aus übereinander liegenden Rotorblechen 1 gebildetes Blechpaket 101. Die ersten und zweiten Aussparungen 2, 3 der übereinander gestapelten Rotorbleche 1 bilden durchgängige Magnettaschen 6, in denen Permanentmagnete 4 eingebettet sind. Die Permanentmagnete 4 sind in den Magnettaschen 6 durch Keilelemente 9 kraftschlüssig fixiert. Die Keilelemente 9 sind in den Magnettaschen 6 im Bereich der Ausbuchtungen 8 eingepresst und deformiert, so dass auf den jeweiligen Permanentmagnet 4 eine Rückstellkraft ausgeübt wird. Die Permanentmagnete 4 sind dadurch zwischen den Keilelementen 9 und den jeweils gegenüberliegenden Anlageschultern 7 kraftschlüssig gehalten.

In dem in Figur 4 gezeigten Ausführungsbeispiel sind die Permanentmagnete 4 zusätzlich in den Magnettaschen 6 mittels eines ausgehärteten Reaktionsharzes stoffschlüssig fixiert. Zum Einbringen des Reaktionsharzes werden bevorzugt Permanentmagnete 4 verwendet, die mit einer das Reaktionsharz beinhalteten Beschichtung 10 versehen sind. In einem bevorzugten Ausführungsbeispiel beinhaltet die Beschichtung 10 eine Matrix aus einem teilvernetzten und teilweise ausgehärteten Reaktionsharz und ein Härter.

Bei einem Verfahren zum Herstellen insbesondere des in Figur 5 gezeigten Rotors 100 mit Staffelung werden zunächst Einzelpakete 102 aus mehreren Rotorblechen 1 gebildet. In den Magnettaschen 6 der Einzelpakete 102 werden Permanentmagnete 4 durch ebenfalls in die Magnettaschen 6 einzubringende Keilelemente 9 kraftschlüssig fixiert. Die Permanentmagnete 4 weisen die vorstehend beschriebene Beschichtung 10 auf, welche aus teilvernetztem Reaktionsharz mit Härter besteht. In diesem metastabilen Zustand kann das Reaktionsharz wieder verflüssigt werden. Hierzu wird der Rotor 100 mit den darin eingebrachten Permanentmagneten 4 auf eine Temperatur erhöht, die höher als eine Erweichungs- oder Verflüssigungstemperatur der Beschichtung 10 ist. Das Reaktionsharz verteilt sich daraufhin innerhalb der Magnettaschen 6 und härtet anschließend aus, um die Permanentmagnete 4 stoffschlüssig zu fixieren. Ein derartiges Verfahren bietet sich insbesondere bei der Fertigung von Rotoren 100 mit Staffelung an, da bei diesen Bauformen ein nachtägliches Einbringen von Reaktionsharz in die Magnettaschen 6 schwierig ist. Die stoffschlüssige Fixierung der Permanentmagnete 4 müsste somit auf der Ebene der Einzelpakete 102 erfolgen, was fertigungstechnisch aufwändig ist.

Obwohl die Erfindung im Detail mit Bezug auf bevorzugte Ausführungsbeispiele näher illustriert und beschrieben wurde, so ist die Erfindung nicht hierdurch eingeschränkt. Andere Variationen und Kombinationen können vom Fachmann hieraus abgeleitet werden, ohne vom wesentlichen Gedanken der Erfindung abzuweichen. Insbesondere ist das vorgestellte Herstellungsverfahren auch für die Fertigung von herkömmlichen Rotoren 101 ohne Staffelung geeignet.

## Patentansprüche

1. Rotor (100) für eine permanenterregte, rotierende elektrische Maschine, mit einem mehrere innenliegende Magnettaschen (6) aufweisendes Blechpaket (101) und einer Vielzahl von in den Magnettaschen (6) eingebetteten Permanentmagneten (4), wobei die Permanentmagnete (4) in den Magnettaschen (6) durch darin eingebrachte, zumindest abschnittsweise deformierbare Keilelemente (9) kraftschlüssig fixiert sind.

2. Rotor (100) nach Anspruch 1, wobei jeder Permanentmagnet (4) in der jeweiligen Magnettasche (6) zwischen dem darin eingebrachten Keilelement (9) und einer gegenüberliegend angeordneten Anlageschulter (7) der Magnettasche (6) verklemmt ist.

3. Rotor (100) nach Anspruch 1 oder 2, wobei das Keilelement (9) die Gestalt eines O-Rings oder eines Hohlzylinders hat.

4. Rotor (100) nach einem der vorhergehenden Ansprüche, wobei das Keilelement (9) aus Kunststoff besteht.

5. Rotor (100) nach einem der vorhergehenden Ansprüche, wobei jeder Permanentmagnet (4) in der Magnettasche (6) durch ein ausgehärtetes Reaktionsharz stoffschlüssig fixiert ist.

6. Rotor (100) nach der vorhergehenden Anspruche,
wobei das Blechpaket (101) mehrere, entlang einer Rotorwelle (103) nebeneinander drehfest fixierte Einzelpakete (102) umfasst, wobei jedes Einzelpaket (102) mehrere innenliegende Magnettaschen (6) aufweist und nebeneinander angeordnete Einzelpakete (102) zueinander mit einem Winkelversatz um eine Rotorachse (R) verdreht angeordnet sind.

7. Verfahren zum Herstellen eines Rotors (100) für eine permanenterregte, rotierende elektrische Maschine nach einem der vorhergehenden Ansprüche, wobei ein Blechpaket (101) des Rotors (100) mehrere innenliegende Magnettaschen (6) aufweist, in denen Permanentmagnete (4) und zumindest abschnittsweise deformierbare Keilelemente (9) eingebracht werden, die die Permanentmagnete (4) in den Magnettaschen (6) kraftschlüssig fixieren.

8. Verfahren nach Anspruch 7, wobei zumindest einer der Permanentmagnete (4) mit einer ein Reaktionsharz umfassenden Beschichtung (10) versehen ist, der Rotor mit den eingebrachten und mittels Keilelementen (6) fixierten Permanentmagneten (4) auf eine Temperatur erhöht wird, die höher als eine Erweichungs- oder Verflüssigungstemperatur der Beschichtung (10) ist, woraufhin das Reaktionsharz sich innerhalb der Magnettaschen (6) verteilt und anschließend ausgehärtet, um die Permanentmagnete (4) stoffschlüssig zu fixieren.

9. Verfahren nach Anspruch 7 oder 8, wobei die Beschichtung (10) eine Matrix aus dem Reaktionsharz und einem Härter umfasst.

10. Verfahren nach Anspruch 9, wobei die Matrix aus teilvernetztem und teilweise ausgehärtetem Reaktionsharz besteht.
